# EUROPÄISCHE PATENTSCHRIFT

(11) **EP 0 415 112 B1**
(45) Veröffentlichungstag und Bekanntmachung des Hinweises auf die Patenterteilung: **02.11.1995**
(21) Anmeldenummer: 90114796.7
(22) Anmeldetag: 01.08.1990
(51) Int. Cl.: H04J 3/16

(54) **Kreuzschaltungsverfahren (Cross-Connect) für STM-1-Signale der Synchron-Digital-Multiplexhierarchie**
Cross-connection method for STM-1 signals of the synchronous-digital multiplexhierarchy
Procédé d'interconnexion (cross-connect) pour signaux STM-1 d'une hiérarchie multiplex synchrone et numérique

(30) Priorität: 31.08.1989 DE 3928905; 08.09.1989 DE 3930007
(43) Veröffentlichungstag der Anmeldung: 06.03.1991
(73) Patentinhaber: SIEMENS AKTIENGESELLSCHAFT, 80333 München (DE)
(72) Erfinder: Pospischil, Reginhard, Dr.-Ing., D-8032 Gräfelfing (DE); Müller, Horst, Dipl.-Ing., D-8021 Hohenschäftlarn (DE)

(56) Entgegenhaltungen:
- WO-A-90/06660
- DE-A- 3 511 352
- GLOBAL TELECOMMUNICATIONS CONFERENCE 1987. TOKYO, JP; 15 - 18. NOV. 1987; Bd. 3, Seiten 1449 -1454; N. FUJIMOTO et al. : " BROADBAND SUBSCRIBER LOOP SYSTEM USING MULTI-GIGABIT INTELLIGENT OPTICAL SHUTTLE NODES"

## Beschreibung

Die Erfindung bezieht sich auf ein Kreuzschaltungsverfahren (Cross-Connect) für STM-1-Signale der Synchron-Digital-Multiplexhierarchie unter Verwendung von Demultiplexverfahren, bei denen jedes STM-1-Signal zuerst in drei oder vier Obereinheiten zerlegt und die so gewonnenen Signale direkt oder wahlweise uber weitere Wege in Untereinheiten zerlegte Signale in mehrere Pulsrahmen von Koppelfeld-Eingabesignalen eingefügten Eingängen eines Koppelfeldes zugeführt werden und vom Koppelfeld ausgegebene Koppelfeld-Ausgangssignale einem das Demultiplexverfahren umkehrenden Multiplexverfahren unterworfen werden.

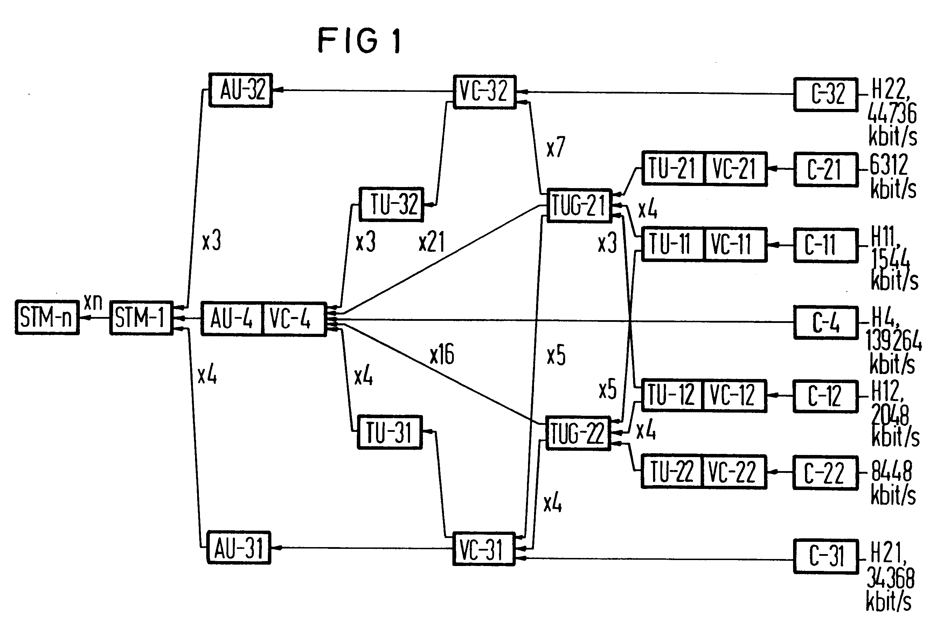

Die dort angesprochenen Multiplex- und Demultiplexverfahren sind beispielsweise aus der CCITT-Empfehlung G.709, Figur 1.1/G.709 und aus einem Multiplexaufbau bekannt, der bei dem European Transmission Standards Institut ETWI beim TM3-Treffen (Transmission and Multiplexing) in Brüssel zwischen dem 24. und 28. April 1989 behandelt wurde.

Aus der deutschen Offenlegungsschrift DE 35 11 35 A1 ist ein Verfahren und eine Koppeleinrichtung zum Verteilen von plesiochronen Breitband-Digitalsignalen bekannt, bei dem diese Signale von einem zentralen Takt gesteuert unter Stopfen in Zusatzsignale enthaltende Zwischen-Digitalsignale umgesetzt und Durchlaufen eines Koppelfeldes wieder in plesiochrone Breitband-Digitalsignale rückumgesetzt werden.

Nach einem älteren in der DE-OS 39 23 172 A1 gemachten Vorschlag (P 39 23 172.0) werden Datenblöcke unterschiedlicher Multiplexebenen in Cross-Connect-Datenblöcke umgesetzt, die in einem festen Überrahmen für eine Übertragungsbitrate von 38 912 kbit/s (D39-Signal) eingeordnet werden.

Aufgabe der Erfindung ist es, ein Verfahren anzugeben, mit dem Datenblöcke unterschiedlicher Multiplexstruktur in Cross-Connect-Datenblöcke umgesetzt werden können.

Diese Aufgabe wird mit den Merkmalen des Anspruchs 1 gelöst. Ausgestaltungen des Verfahrens sind den Unteransprüchen zu entnehmen.

Eine Virtualcontainergruppe besteht aus einem oder mehreren Virtualcontainern, Untersystemeinheiten oder Untersystemeinheitsgruppen.

Mit diesem Verfahren kann ein Umformer zum Übergang von der Struktur einer Untersystemeinheitsgruppe TUG-31 oder TUG-32 zur Struktur einer Untersystemeinheit TU-31 oder TU-32 realisiert werden. Dieses Verfahren eignet sich ebenso zum Aufbau eines sogenannten Drop-Insert-Multiplexers für die Synchron-Digital-Multiplexhierarchie.
- Figur 1: zeigt eine erste Multiplexstruktur,
- Figur 2: zeigt einen Untersystemeinheits-Überrahmen,
- Figur 3: zeigt eine zweite Multiplexstruktur,
- Figur 4: zeigt einen Virtualcontainer VC-4 mit einer Untersystemeinheit TU-31 und drei Untersystemeinheitsgruppen TUG-31,
- Figur 5a: zeigt einen ersten Demultiplexer,
- Figur 5b: zeigt einen ersten Multiplexer,
- Figur 6a: zeigt einen zweiten Demultiplexer,
- Figur 6b: zeigt einen zweiten Multiplexer und
- Figur 7: zeigt einen gemeinsam gesteuerten zweiten Demultiplexer und Multiplexer.

Figur 1 zeigt die Multiplexstruktur nach der CCITT-Empfehlung G.709. Figur 1.1/0.709. Es bedeutet AU Verwaltungseinheit (Administration Unit), C Container, H Digitalsignal, STM Synchroner Transportmodul, TU Untersystemeinheit (Tributary Unit), TUG Untersystemeinheitsgruppe (Tributary Unit Group) und VC Virtualcontainer.

Die zu übertragenden Digitalsignale werden am Eingangsknoten zum synchronen Netz mittels positivem Stopfen in Gontainer C-n eingefügt. Jeder Container wird durch Hinzufügen eines Pfadrahmenkopfes (Path Overhaed) POH zu einem Virtualcontainer VC-n ergänzt, die periodisch übertragen werden. Das erste Byte eines Virtualcontainers wird durch einen Zeiger (Pointer) PTR angegeben, dessen zeitliche Lage im Übertragungsrahmen festgelegt ist. Als solcher dient in der Regel der Virtualcontainer einer höheren Hierarchiestufe. Ein Virtualcontainer VC-n bildet mit dem ihm zugeordneten Zeiger eine Untersystemeinheit TU-n. Mehrere dieser gleichen Aufbaus können wieder zu einer Untersystemeinheitsgruppe TUG-n zusammengefaßt werden. In den oben genannten CCITT-Empfehlungen sind Untersystemeinheitsgruppen TUG-21 für die nordamerikanische 1,5 Mbit/s-Hierarchie und TUG-22 für die 2-Mbit/s-Hierarchie genannt, die u.a. in Europa üblich ist.

Figur 1 zeigt die verschiedenen Wege, über die ein Multiplexen oder Demultiplexen möglich ist. So können beispielsweise vierundsechzigg H12-Signale über die Untersystemeinheitsgruppe TUG-22 entweder direkt oder auf dem Umweg über den Virtualcontainer VC-31 und die Bildung der Untersystemeinheit TU-31 in den Virtualcontainer VC-4 eingefügt werden.

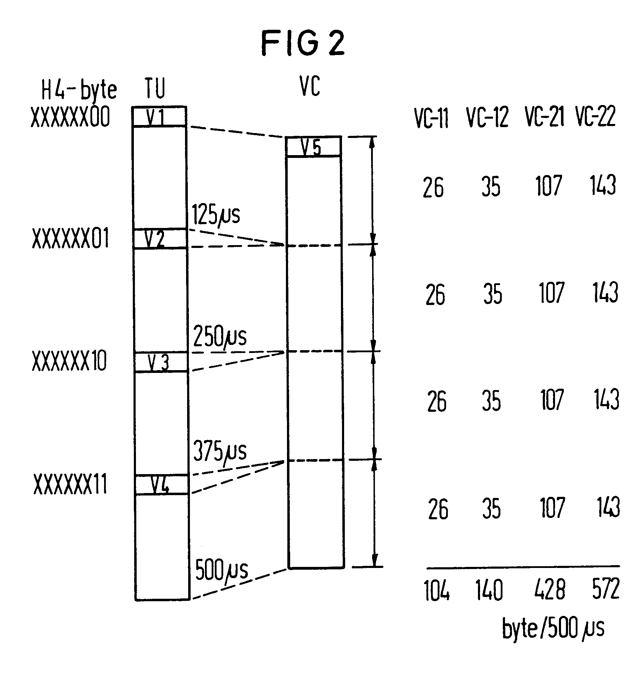

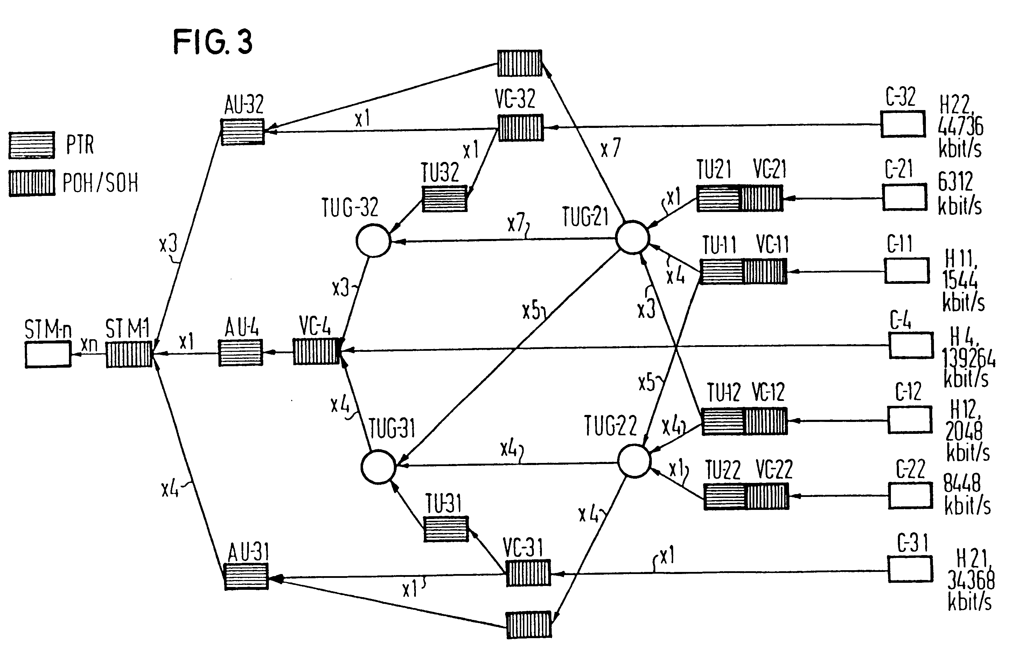

Wie Figur 2 oder die CCITT-Empfehlung G.709, Figur 3.13/G.709 zeigen, sind die Untersytemeinheiten TU-12 bzw. TU-22 in Überrahmen zu je 500 µs eingeteilt. Ein solcher enthält vier Rahmen mit einer Periodendauer von 125 µs. Das erste Byte V1, V2, V3 und V4 eines jeden Rahmens ist in der CCITT-Empfehlung G.709 festgelegt. Die Bytes V1 befinden sich immer in der ersten Zeile eines Überrahmens. Der Pfadrahmenkopf POH des Virtualcontainers VC-31 bzw. des Virtualcontainers VC-4 legt den Überrahmen durch ein Byte V4 fest. Die erste Zeile wird durch ein Byte J1 gekennzeichnet. Bei der direkten Einfügung der Untersystemeinheitsgruppe TUG-22 in den Virtualconatiner VC-4 bestimmt also der Pfadrahmenkopf POH des Virtualconatiners VC-4 die Lage der Bytes Vn, während bei einer Einfügung über den Virtualcontainer VC-31 der Pfadrahmenkopf VC-31 POH des Virtualcontainers VC-31 die Anordnung der Bytes Vn bestimmt.

Die Wahl des geeigneten Weges erfolgt aufgrund des Signalinhalts und/oder gesteuert von einem Netzwerk-Management.

Beide Wege haben ihre Vor- und Nachteile. Man benötigt jedoch an beiden Enden einer Verbindung die gleichen Multiplexeinrichtungen, wenn man nicht in die Verbindung einen Umformer einfügt, der beispielsweise aus den sechzehn Untersystemeinheitsgruppen TUG-22 des einen Weges vier Untersystemeinheiten TU-31 des anderen Weges formt. Das gilt auch für die Übertragung von maximal sechzehn 8448-kbit/s-Signalen oder von einer Mischung aus 8448- und 2048-kbit/s-Signalen (H12-Signalen). Entsprechendes gilt für den Aufbau des Virtualcontainers VC-4 über einundzwanzig Untersystemeinheitsgruppen TUG-21 oder drei Untersystemeinheiten TU-31 für die 1,5-Mbit/s-Hierarchie im oberen Teil der Figur 1.

34368-kbit/s-Signale (H21-Signale) können nur auf dem Weg über den Virtualcontainer VC-31 und die Untersystemeinheit TU-31 eingefügt werden. Eine Mischung von n x 4 Untersystemeinheitsgruppen TUG-22 mit 4 - n Untersystemeinheiten TU-31 mit n = 1, 2, 3 oder 4 ist nach der CCITT-Empfehlung G.709 nicht vorgesehen.

Die Anordnung nach Figur 3 von ETSI unterscheidet sich von der nach Figur 1 durch den Wegfall des Weges von der Untersystemeinheitsgruppe TUG-22 über den Virtualcontainer VC-31 und die Untersystemeinheit TU-31 zum Virtualcontainer VC-4. Andererseits ist es möglich, Virtualcontainer VC-4 mit einer Mischung aus n x 4 Untersystemeinheitsgruppen TUG-22 und 4 - n Untersystemeinheiten TU-31 aufzubauen. Vier Untersystemeinheitsgruppen TUG-22 bilden eine Untersystemeinheitsgruppe TUG-31. Diese besitzt im Gegensatz zu einer Untersystemeinheit TU-31 keinen eigenen Zeiger und auch keinen gemeinsamen Pfadrahmenkopf. Jedoch sind die zu einer Untersystemeinheitsgruppe TUG-31 gehörenden Zeiger der Untersystemeinheiten TU-12 oder TU-22 regelmäßig angeordnet. Ihre Lage ist durch den Pfadrahmenkopf VC-4 POH des Virtualcontainers VC-4 bestimmt. Bei einer solchen Mischung enthalten die ersten vier Spalten eines Containers C-4 die TU-31-Zeiger oder ein festes Muster (Stopfen).

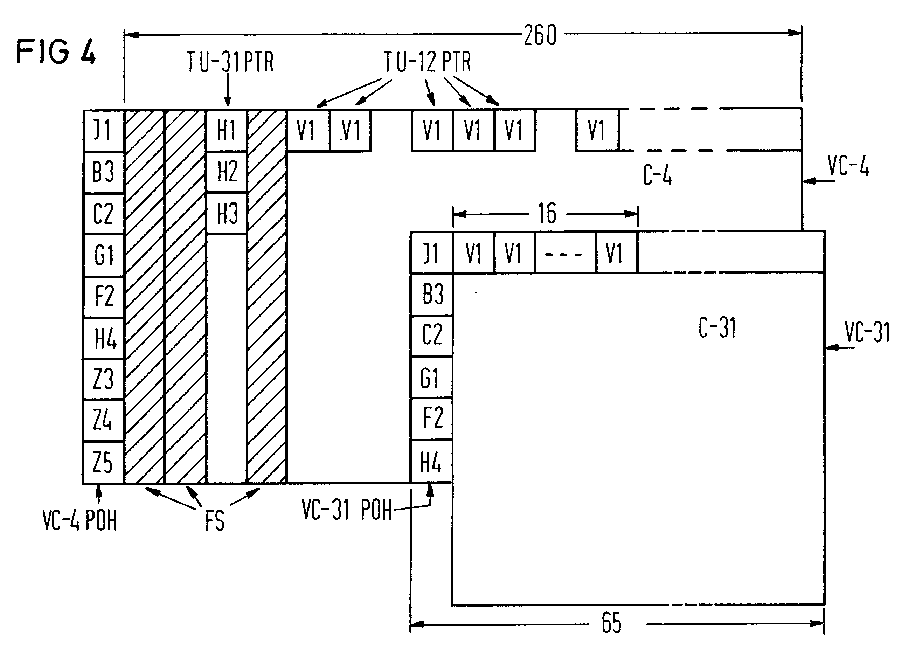

Figur 4 zeigt ein Beispiel, bei dem in einem Virtualcontainer VC-4 alternierend zwei Untersystemeinheitsgruppen TUG-31, eine Untersystemeinheit TU-31 und eine dritte Untersystemeinheitsgruppe TUG-31 spaltenweise eingefügt werden. Durch eine Auswertung der ersten vier Spalten mit fest gestopften Bytes (Fixed) Stuff) FS und einem Zeiger TU-31 PTR erhält man Kenntnis darüber, ob es sich um eine Untersystemeinheitsgruppe TUG-31 oder um eine Untersystemeinheit TU-31 handelt. Der Virtualcontainer VC-31, der rechts unten dargestellt ist, wird reihenweise alternierend in die dritten von vier Spalten nach dem Pfadrahmenkopf VC-4 POH eingefügt, wobei die Lage des Bytes J1 durch den Zeiger TU-31 PTR beschrieben wird. Die Untersystemeinheitsgruppen TUG-31 beginnen in den ersten, zweiten und vierten Spalten jeweils mit einem Byte V1, von denen es in diesem Beispiel achtundvierzig gibt.

Bei digitalen Gross-Connectoren wie bei Drop-Insert-Multiplexern müssen alle Signale, die zu einem neuen Ausgangssignal zusammengefaßt werden sollen, auf den Takt und den Rahmen des Ausgangssignals synchronisiert werden. In der Synchron-Digital-Multiplexhierarchie haben alle Ausgangssignale STM-1 eines Netzknotens den gleichen Takt und den gleichen Rahmen. Alle geschlossen durchgereichten, in Untersystemeinheiten zerlegten und nach einer Koppelmatrix erneut zusammengesetzten Signale müssen deshalb vor der Zusammensetzung aufeinander synchronisiert werden.

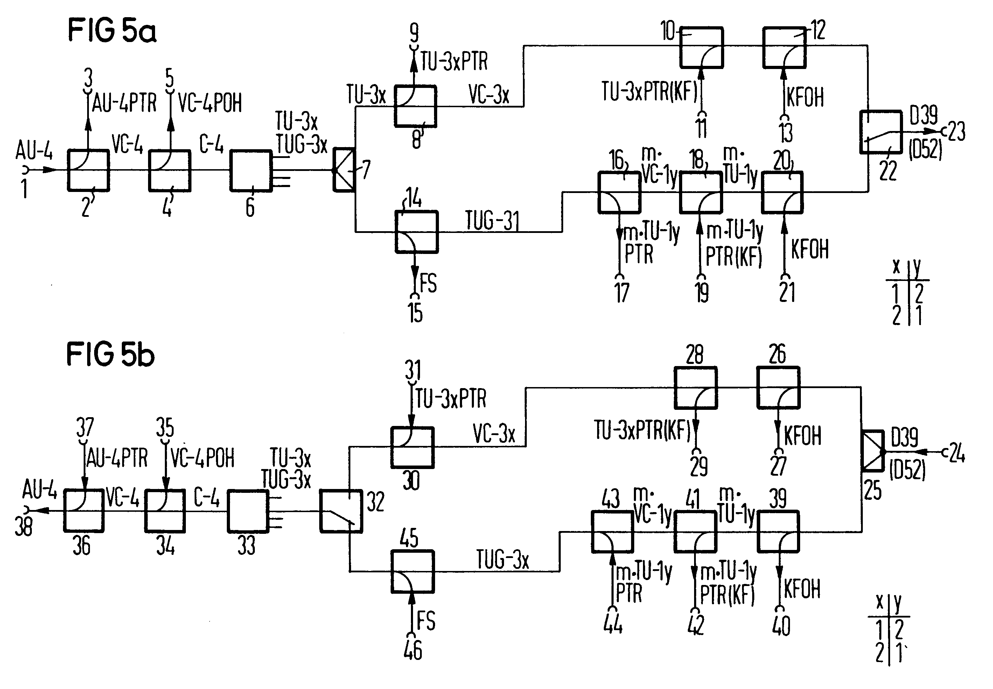

Figur 5a zeigt einen Demultiplexers, der dem Koppelfeld eingangsseitig vorgeschaltet ist. Die Anordnung enthält einen AU-4-PTR-Auskoppler und -Auswerter 2, einen VC-4-POH-Auskoppler und -Auswerter 4, einen Container-Demultiplexer mit Synchronisiereinrichtung 6, einen Parallelverzweiger 7, einen ersten Weg mit einem TU-3x-PTR-Auskoppler und -Auswerter 8, mit einem TU-3x-Koppelfeld-Taktanpassungzeiger-Einkoppler 10 und mit einer Koppelfeld-Zusatzinformation-Einfügeeinrichtung 12, einen zweiten Weg mit einem Feste-Stopfbytes-Auskoppler 14, mit einem Mehrfach-TU-1y-PTR-Auskoppler und -Auswerter 16, mit einem Mehrfach-TU-1y-Koppelfeld-Taktanpassungszeiger-Einkoppel-und Synchronisiereinrichtung 18 und mit einer Koppelfeld-Zusatzinformation-Einfügeeinrichtung 20 sowie ferner einen Signalumschalter 22. Die Einheiten 7 bis 22 sind für die 2-Mbit/s-Hierarchie viermal und für die 1,5-Mbit/s-Hierarchie dreimal vorhanden, was für erstere durch die vier (Ausgänge des Container-Demultiplexers mit Synchronisiereinrichtung 6 angedeutet ist. Für die europäische Hierarchie gilt x = 1 und y = 2, für die US-Hierarchie x = 2 und y = 1. Die für jede Taktanpassung erforderlichen Pufferspeicher sind hier und in den folgenden Figuren der Übersichtlichkeit halber nicht dargestellt.

Dem Eingang 1 wird die AU-4-Verwaltungseinheit eines synchronen Transportmoduls STM-1 zugeführt. Vom AU-4-PTR-Auskoppler und -Auswerter 2 wird der AU-4-PTR-Zeiger über einen Ausgang 3 ausgekoppelt und ausgewertet. Der verbleibende VC-4-Virtualcontainer gelangt zum VC-4-POH-Auskoppler und -Auswerter 4, der den VC-4-POH-Pfadrahmenkopf auswertet und an seinem Ausgang 5 abgibt. Die Information über den Containeranfang und den Überrahmenstatus wird den folgenden Schaltungen 6, 8, 14, 16, 18 und 20 mitgeteilt. Der C-4-Container gelangt zum Container-Demultiplexer mit Synchronisiereinrichtung 6. In diesem wird er für die 2-Mbit/s-Hierarchie in vier und für die 1,5-Mbit/s-Hierarchie in drei TU-3x-Untersystemeinheiten, vier TUG-3x-Untersystemeinheitsgruppen oder eine Mischung aus beiden aufgespalten. Den vier Parallelverzweigern 7 wird entweder jeweils eine TU-3x-Untersystemeinheit oder eine TUG-3x-Untersystemeinheitsgruppe zugeführt.

In dem TU-3x-PTR-Auskoppler und -Auswerter 8 im ersten Weg und dem Feste-Stopfbytes-Auskoppler 14 im zweiten Weg wird untersucht, ob ein TU-3x-PTR-Zeiger oder ob feste Stopfbytes FS vorhanden sind. Ist ein TU-3x-PTR-Zeiger vorhanden, wird dieser ausgewertet und über einen Ausgang 9 abgegeben. Die Information über den Containeranfang und den Überrahmenstatus wird den folgenden Schaltungen 10 und 12 mitgeteilt. Sind feste Stopfbytes FS vorhanden, werden diese über einen Ausgang 15 abgegeben.

Am Ausgang des TU-3x-PTR-Auskopplers und -Auswerters 8 steht gegebenenfalls ein VC-3x-Virtualcontainer mit seinem Quellentakt zur Verfügung. Dieser VC-3x-Virtualcontainer wird in dem TU-3x-Koppelfeld-Taktanpassungszeiger-Einkoppler 10 auf den örtlichen vom Netzknotentakt abgeleiteten Koppelfeldtakt unter Einfügung eines TU-3x-PTR-(KF)-Zeigers zur Taktanpassung aufsynchronisiert und in der Koppelfeld-Zusatzinformation-Einfügeeinrichtung 12 mit der Koppelfeld-Zusatzinformation KFOH, diese beinhaltet ein Koppelfeld-Rahmenerkennungswort, Koppelfeld-Adressen und Koppelfeld-Qualitätsüberwachungsinformation, am Eingang 13 in einen Koppelfeld-Überrahmen eingefügt. Ist der Ausgang 23 über den Signalumschalter 22 mit dem Ausgang der Koppelfeld-Zusatzinformation-Einfügeeinrichtung 12 verbunden, steht am Ausgang für x = 1 ein D39-Digitalsignal mit 38 912 kbit/s und für x = 2 ein D52-Digitalsignal mit 51 968 kbit/s zur Verfügung. Dieses kann entweder einem nicht dargestellten Demultiplexer zur Auflösung des VC-3x-Virtualcontainers oder einem Multiplexer nach Figur 5b zum Aufbau einer neuen AU-4-Verwaltungseinheit zugeführt werden.

Würden jedoch in dem Feste-Stopfbytes-Auskoppler 14 feste Stopfbytes erkannt, träte an dessen Hauptausgang eine TUG-3x-Untersystemeinheitsgruppe auf, die entweder aus sechzehn TU-12-Untersystemeinheiten oder aus achtundzwanzig TU-11-Untersystemeinheiten (m TU-1y-Untersystemeinheiten) bestünde. In dem Mehrfach-TU-1y-PTR-Auskoppler und -Auswerter 16 würden m TU-1y-PTR-Zeiger ausgewertet und über einen Ausgang 17 entfernt. Vom Mehrfach-TU-1y-PTR-Auskoppler und -Auswerter 16 gelangten m VC-1y-Virtualcontainer zur Mehrfach-TU-1y-Koppelfeld-Taktanpassungszeiger-Einkoppel- und Synchronisiereinrichtung 18. Dort würden sie unter Einfügung von m TU-1y-PTR-(KF)-Zeigern auf den örtlichen Koppelfeldtakt aufsynchronisiert und in der Koppelfeld-Zusatzinformation-Einfügeeinrichtung 20 unter Zuführung der Koppelfeld-Zusatzinformation KFOH über einen Eingang 21 in den Koppelfeld-Überrahmen eingebettet. Verbände der Signalumschalter 22 jetzt den Ausgang 23 mit dem Hauptausgang der Koppelfeld-Zusatzinformation-Einfügeeinrichtung 20, gelangte ebenfalls entweder ein D39- oder ein D52-Digitalsignal zum Ausgang 23.

Die Koppelfeld-Zusatzinformation-Einfügeeinrichtung 20 enthält zweckmaßigerweise auch eine "Router"-Funktion (Zeit-Koppelfeld), mit der die zeitliche Reihenfolge der m VC-1y-Virtualcontainer variiert werden kann.

Das jetzt am Ausgang 23 zur Verfügung stehende D39- oder D52 Digitalsignal und die aus dem Container-Demultiplexer 6 aus der gleichen Obereinheit abgezweigten Koppelfeld-Eingangssignale können über ein Zeitschlitz-gesteuertes Koppelfeld entweder einem nicht dargestellten Demultiplexer zur Auflösung der einzelnen VC-1y-Virtualcontainer über C-1y-Container in plesiochrone Signale H1y oder einem Multiplexer nach der Figur 5b zum Aufbau neuer AU-4-Verwaltungseinheiten zugeführt werden.

Figur 5b zeigt einen Multiplexer für die Sendeseite des Koppelfeldes. Die Anordnung enthält einen Parallelverzweiger 25, einen ersten Weg mit einer Koppelfeld-Zusatzinformation-Auskoppeleinrichtung 26, mit einem TU-3x-Koppelfeld-Taktanpassungzeiger-Auskoppler und -Auswerter 28 und mit einem TU-3x-PTR-Einkoppler 30, ferner einen Signalumschalter 32, einen Container-Multiplexer 33, einen VC-4-POH-Einkoppler 34, einen AU-4-PTR-Einkoppler 36, einen zweiten Weg mit einer Koppelfeld-Zusatzinformation-Auskoppeleinrichtung 39 mit einem Mehrfach-TU-1y-Koppelfeld-Taktanpassungszeiger-Auskoppler und-Auswerter 41, mit einem Mehrfach-TU-1y-PTR-Einkoppler 43 und mit einem Feste-Stopfbytes-Einkoppler 45.

Das Multiplexverfahren läuft in umgekehrter Reihenfolge ab wie beim Demultiplexer nach Figur 5a. Zuerst wird in der Koppelfeld-Zusatzinformation-Auskoppeleinrichtung 26 die Koppelfeld-Zusatzinformation KFOH ausgekoppelt, ausgewertet und über den Ausgang 27 abgegeben. In dem TU-3x-Koppelfeld-Taktanpassungszeiger-Auskoppler und -Auswerter 28 wird der TU-3x-PTR-(KF)-Zeiger ausgewertet und über den Ausgang 29 abgegeben. Dem verbleibenden VC-3x-Virtualcontainer wird im TU-3x-PTR-Einkoppler 30 über den Eingang 31 ein TU-3x-PTR-Zeiger hinzugefügt. Hierbei ist jedoch keine Taktanpassung durch Stopfen erforderlich, da alle D39- bzw. D52-Digitalsignale vor dem Koppelfeld bereits auf den Netzknotentakt synchronisiert wurden.

In der Koppelfeld-Zusatzinformation-Auskoppeleinrichtung 39 wird bei dem D39- oder D52-Digitalsignal die Koppelfeld-Zusatzinformation KFOH ausgewertet und über den Ausgang 40 abgegeben. Die verbleibenden m TU-1y-Untersystemeinheiten gelangen zum Mehrfach-TU-1y-Koppelfeld-Taktanpassungszeiger-Auskoppler und -Auswerter 41, wo die m TU-1y-PTR-(KF)-Zeiger ausgewertet und über den Ausgang 42 abgegeben werden. Auch Hier ist keine Taktanpassung durch Stopfen erforderlich, da alle D39- bzw. D52-Digitalsignale bereits vor dem Koppelfeld auf den Netzknotentakt synchronisiert wurden. Den verbleibenden m VC-1y-Virtualcontainern werden in den Mehrfach-TU-1y-PTR-Einkoppler 43 über einen Eingang 44 m TU-1y-PTR-Zeiger zugeführt. In die abgegebene TUG-3x-Untersystemeinheitsgruppe werden in dem Feste-Stopfbytes-Einkoppler 45 feste Stopfbytes FS hinzugefügt.

Die Stellung des Signalumschalters 32 richtet sich nach dem Signalinhalt des D39- bzw. D52-Signals oder wird von einem Netzwerk-Management bestimmt. Im Container-Multiplexer 33 erfolgt ein byteweises Verschachteln für die 2-Mbit/s-Hierarchie von vier und für die 1,5-Mbit/s-Hierarchie von drei TU-3x-Untersystemeinheiten und/oder TUG-3x-Untersystemeinheitsgruppen. Im VC-4-POH-Einkoppler 34 wird dem C-4-Container über einen Eingang 35 ein VC-4-POH-Pfadrahmenkopf zugefügt. Dem so gebildeteten VC-4-Virtualcontainer wird im AU-4-PTR-Einkoppler 36 über einen Eingang 37 ein AU-4-PTR-Zeiger zugefügt, so daß am Ausgang 38 eine AU-4-Verwaltungseinheit eines synchronen Transportmoduls STM-1 abgegeben werden kann.

Der in der Figur 5a gezeigte Demultiplexer und der in Figur 5b gezeigte Multiplexer ist für "Drop and Insert"-Funktionen, "Routing"-Funktionen und Cross Connects für Signale an den Knoten von TUG-3x-Untersystemeinheitsgruppen des ETSI-Vorschlags nach Figur 3 geeignet.

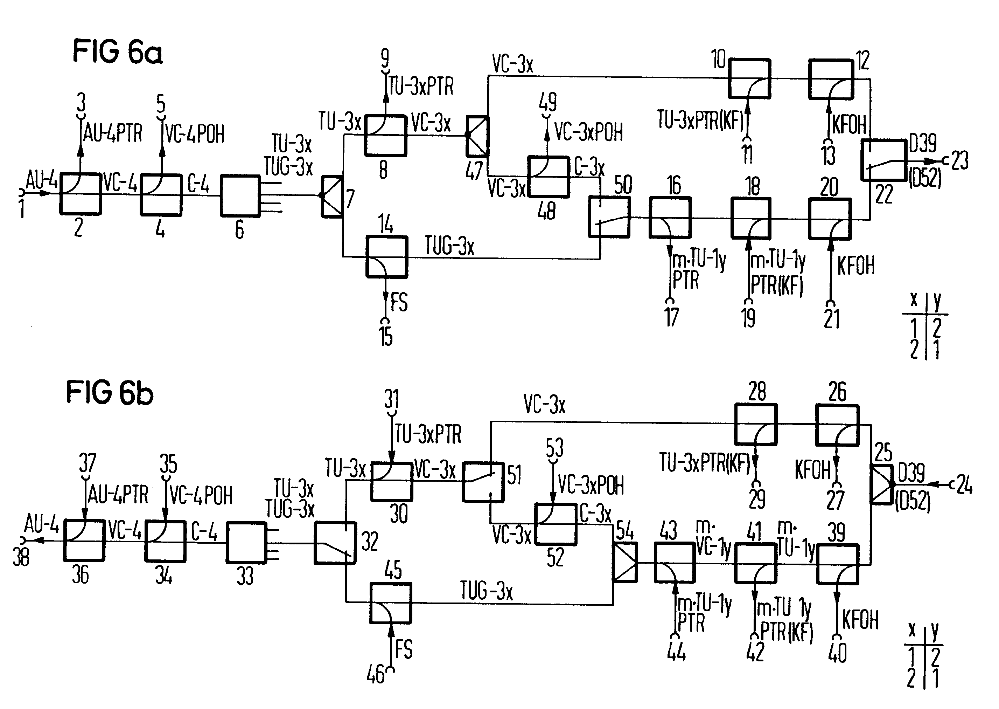

Mit den in den Figuren 6a und 6b gezeigten zusätzlichen Funktionen können auch TUG-2y-Untersystemeinheitsgruppen nach Figur 1 über VC-3x-Virtualcontainer und TU-3x-Untersystemeinheiten in den VC-4-Virtualcontainer geführt und in entsprechender Weise behandelt werden.

Der Demultiplexer nach Figur 6a enthält im Gegensatz zum Demultiplexer nach Figur 5a zusätzlich einen dritten Weg mit einer Parallelverzweigung 47, mit einem VC-3x-POH-Auskoppler 48 und mit einem Signalumschalter 50. Der Multiplexer nach Figur 6b enthält im Gegensatz zu dem nach Figur Sb zusätzlich einen dritten Weg mit einem Signalumschalter 51, mit einem VC-3x-POH-Einkoppler 52 und mit einer Parallelverzweigung 54. Soll ein VC-3x-Virtualcontainer in geschlossener Form durchgeschaltet werden, so führt der Weg über die Einheiten 47, 10, 12 und 22 bzw. 25, 26, 28 und 51. Soll jedoch ein VC-3x-Virtualcontainer in seine TU-1y-Untersystemeinheiten zerlegt werden, so werden die Wege über die Einheiten 47, 48, 50, 16, 18, 20 und 22 bzw. 25, 39, 41, 43, 54, 52 und 51 aktiviert. Im VC-3x-POH-Auskoppler 48 wird einem VC-3x-Virtualcontainer über einen Ausgang 49 der VC-3x-POH-Pfadrahmenkopf entnommen und ausgewertet. Dieser gibt für den C-3x-Container Anfangsbyte und Überrahmenzugehörigkeit an. Der Inhalt des C-3x-Containers hat den gleichen Aufbau wie eine TUG-3x-Untersystemeinheitsgruppe und kann deshalb wie in Figur 5a über die Einheiten 16, 18 und 20 weiterbehandelt werden.

Entsprechend wird in Figur 6b dem VC-3x-POH-Einkoppler 52 über einen Eingang 53 ein VC-3x-POH-Pfadrahmenkopf hinzugefügt.

Die in den Figuren 5a, 5b, 6a und 6b gezeigten Funktionen in den jeweils ersten und zweiten Wegen stimmen weitgehend überein. So wird in den Figuren 5a und 5b in den Einheiten 8 und 14 die Zeigerspalte einer ankommenden TU-3x-Untersystemeinheit untersucht und ausgeblendet. Die Einheiten 10 und 18 dienen der Einfügung der auf den Koppelfeldtakt und Überrahmen synchronisierten TU-3x-PTR-(KF)-Zeiger und die Einheiten 12 und 20 dienen der Einfügung der Koppelfeld-Zusatzinformation KFOH. Entsprechendes gilt für die Multiplexerseite in den Figuren 5b und 6b.

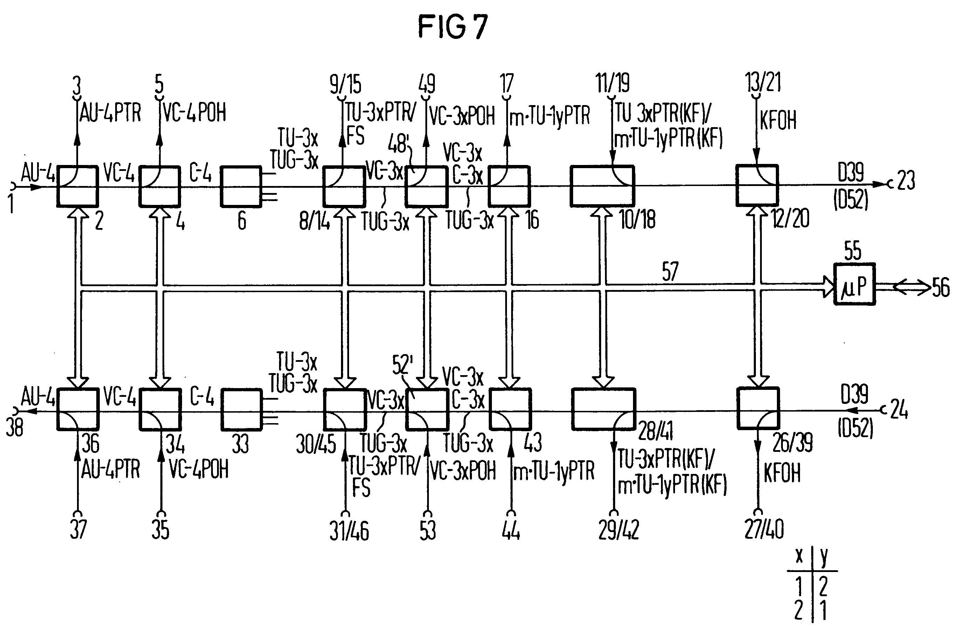

Figur 7 zeigt eine Anordnung, in der diese parallelen Funktionen jeweils von einer einzigen Funktionseinheit ausgeführt werden. Diese erhalten Bezugszeichen, bei denen die zwei ursprünglichen Bezugszeichen durch einen Schrägstrich verbunden sind. Der VC-3x-POH-Auskoppler 48′ und der VC-3x-POH-Einkoppler 52′ müssen noch Durchschaltefunktionen für den jeweils ersten und zweiten Weg übernehmen.

Eine am Eingang 1 ankommende AU-4-Verwaltungseinheit wird in den Einrichtungen 2, 4 und 6 aufbereitet, auf den Netzknotentakt synchronisiert und in ihre TU-3x-Untersystemeinheiten oder TUG-3x-Untersystemeinheitsgruppen aufgeteilt. In der Einheit 8/14 wird festgestellt, ob die erste Zeigerspalte einen TU-3x-PTR-Zeiger oder feste Stopfbytes FS enthält. Im ersten Fall werden nur die ersten drei Bytes der Spalte ausgewertet und dem Signal entnommen. Im zweiten Fall wird dagegen die ganze Spalte mit neun Bytes entnommen. Soll die TU-3x-Untersystemeinheit oder die TUG-3x-Untersystemeinheitsgruppe weiter, beispielsweise in ihre m TU-1y-Untersystemeinheiten zerlegt werden, so wird zunächst für eine TU-3x-Untersystemeinheit der VC-3x-POH-Pfadrahmenkopf in der Einheit 48′ aufgelöst. Dieser Schritt entfällt bei einer TUG-3x-Untersystemeinheitsgruppe. Anschließend müssen in der Einheit 16 die m TU-1y-PTR-Zeiger unter Zuhilfenahme des Bytes H4 aus dem VC-4-POH-Pfadrahmenkopf oder dem VC-3x-POH-Pfadrahmenkopf ausgewertet werden. Es folgt in der Einheit 10/18 die Synchronisierung auf den Koppelfeldtakt und -Überrahmen und ein Einsetzen der TU-3x-PTR-(KF)-Zeiger oder TU-1y-PTR-(KF)-Zeiger des Koppelfeldes. Durch Hinzufügen der Koppelfeld-Zusatzinformation KFOH in der Einheit 12/20 wird das D39- bzw. D52-Signal gebildet.

Der Aufbau des Multiplexsignals in der Gegenrichtung erfolgt zwischen dem Eingang 24 und dem Ausgang 38 entsprechend. Alle Funktionseinheiten werden über ein Bussystem 57 von einem Mikroprozessor 55 gesteuert, der über einen Anschluß 56 mit einem Netzmanagementsystem verbunden ist.

Alle Funktionseinheiten können in einer integrierten Schaltung realisiert sein.

## Patentansprüche

1. Kreuzschaltungsverfahren (Cross-Connect) für STM-1-Signale der Synchron-Digital-Multiplexhierarchie unter Verwendung von Demultiplexverfahren, bei denen jedes STM-1-Signal zuerst in drei (AU-32, TU-32, TUG-32) oder vier (AU-31, TU-31, TUG31) Obereinheiten zerlegt und die so gewonnenen Signale direkt oder wahlweise über weitere Wege in Untereinheiten (TUG-21, TU-11, TU-12, TUG-22, TU-12, TU-22) zerlegte Signale in mehrere Pulsrahmen von Koppelfeld-Eingabesignalen (D39, D52) eingefügt Eingangen eines Koppelfeldes zugeführt werden und vom Koppelfeld ausgegebene Koppelfeld-Ausgangssignale (D39, D52) einem das Demultiplexverfahren umkehrenden Multiplexverfahren unterworfen werden,
**dadurch gekennzeichnet**,
daß in den Demultiplexverfahren STM-1-Signale in Virtualcontainergruppen (TUG-31, TU-31, TUG-32, TU-32, VC-31, VC-32) aufgelöst werden,
daß diesen Virtualcontainergruppen zur Bildung einheitlicher Koppelfeld-Eingangssignale (D39, D52) unter Verzicht auf nicht mehr benötigte Zusatzsignale (PTR, ...) jeweils ein individueller Koppelfeld-Taktanpassungszeiger (TU-3xPTR(KF), TU-1yPTR(KF)) und eine individuelle Koppelfeld-Zusatzinformation (KFOH) beigegeben wird,
daß dem Koppelfeld jeweils aus einer Obereinheit stammende Koppelfeld-Eingangssignale (D39, D52) zugeführt werden,
daß die Virtualcontainer (VC31, VC32, VC11, VC12) der Koppelfeld-Eingangssignale (D39, D52) vor Aufnahme in die Koppelfeld-Ausgangssignale (D39, D52) umrangiert werden, daß die Koppelfeld-Zusatzinformation den Koppelfeld-Ausgangssignalen entnommen und ausgewertet wird,
daß die Koppelfeld-Ausgangssignale jeweils einem Multiplexverfahren zur Bildung von STM-1-Ausgangssignalen unterworfen werden und
daß vom Signalinhalt der Koppelfeld-Ausgangssignale und/oder von einem Netzwerk-Management gesteuert, dabei ein Weg im Multiplexverfahren ausgewählt wird.

2. Verfahren nach Anspruch 1,
**dadurch gekennzeichnet**,
daß als Koppelfeld-Zusatzinformation ein Koppelfeld-Rahmenkennkennungswort, Koppelfeldweg-Adressen und Koppelfeld-Qualitätsüberwachungsinformationen vorgesehen sind.

3. Verfahren nach Anspruch 1,
**dadurch gekennzeichnet**,
daß eine Koppelfeld-Zusatzinformation nur den dem Koppelfeld zugeführten Koppelfeld-Eingangssignalen beigegeben wird.

4. Verfahren nach Anspruch 1,
**dadurch gekennzeichnet**,
daß Virtualcontainergruppen 16 x VC-12, 4 x VC-22, 1 x VC-31, 20 x VC-11 und/oder 5 x VC-21 vorgesehen sind,
daß Koppelfeld-Taktanpassungszeiger (TU-12 PTR (KF), TU-22 PTR (KF), TU-31 PTR (KF), TU-11 PTR (KF) und/oder TU-21 PTR (KF)) vorgesehen sind und
daß Koppelfeld-Eingangssignale und -Ausgangssignale (D39) einer Bitrate von 38912 kbit/s vorgesehen sind.

5. Verfahren nach Anspruch 1,
**dadurch gekennzeichnet**,
daß Virtualcontainergruppen 28 x VC-11, 7 x VC-21, 1 x VC-32 und/oder 21 x VC-12 vorgesehen sind,
daß Koppelfeld-Taktanpassungszeiger (TU-11 PTR (KF), TU-21 PTR (KF), TU-32 PTR (KF) und/oder TU-12 PTR (KF)) vorgesehen sind und
daß Koppelfeld-Eingangssignale und -Ausgangssignale (D52) einer Bitrate von 51968 kbit/s vorgesehen sind.

6. Verfahren nach Anspruch 1 für die Koppelfeld-Eingangsseite, bei dem einem STM-1-Signal aus seiner AU-4-Verwaltungseinheit unter Auskopplung und Auswertung eines AU-4-PTR-Verwaltungseinheitszeigers ein VC-4-Virtualcontainer entnommen wird,
bei dem dem VC-4-Virtualcontainer unter Auskopplung und Auswertung seines VC-4-POH-Pfadrahmenkopfes sein C-4-Container entnommen wird und
bei dem der C-4-Container in vier Alternativpaare jeweils aus einer TU-3x-Untersystemeinheit oder einer TUG-3x-Untersystemeinheitsgruppe aufgeteilt wird,
**dadurch gekennzeichnet**,
daß jedes AlternatIvpaar zwei eingangsseitig verbundenen und ausgangsseitig wechselweise zum Koppelfeld durchschaltbaren Wegen zugeführt wird,
daß im ersten Weg einer TU-3x-Untersystemeinheit sein VC-3x-Virtualcontainer unter Auskopplung und Auswertung des TUG-3x-PTR-Untersystemeinheitszeiger entnommen und dem VC-3x-Virtualcontainer ein TU-3x-PTR-(KF)-Koppelfeld-Taktanpassungszeiger und eine Koppelfeld-Zusatzinformation (KFOH) hinzugefügt wird und
daß im zweiten Weg einer TUG-3x-Untersystemeinheitsgruppe eine feste Stopfung (FS) und eine Anzahl m von TUG-1y-PTR-Untersystemeinheitszeiger unter Auswertung entnommen und der verbleibenden Anzahl m von VC-1y-Virtualcontainern eine Anzahl m von TU-1y-PTR(KF)-Koppelfeld-Taktanpassungszeigern und eine Koppelfeld-Zusatzinformation (KFOH) zur Bildung eines Koppelfeld-Eingangssignals (D39, D52) hinzugefügt werden, wobei entweder x = 1 und y = 2 oder x = 2 und y = 1.

7. Verfahren nach Anspruch 6,
**dadurch gekennzeichnet**,
daß der VC-3x-Virtualcontainer einem vom ersten Weg abzweigenden dritten Weg zugeführt wird,
daß auf dem dritten Weg dem VC-3x-Virtualcontainer unter Auskopplung seines VC-3x-POH-Pfadrahmenkopfes sein C-3x-Container entnommen wird und
daß dieser C-3x-Container anstelle von einer TUG-3x-Untersystemeinheitsgruppe ohne feste FS-Stopfung unter Abschaltung des entsprechenden ersten Teils des zweiten Weges in den verbleibenden Teil des zweiten Weges eingespeist wird.

8. Verfahren nach Anspruch 1 für jeweils vier Koppelfeld-Ausgangssignale,
bei dem C-4-Containern zur Bildung eines VC-4-Virtualcontainers jeweils ein VC-4-POH-Pfadrahmenkopf hinzugefügt wird und
bei dem VC-4-Virtualcontainern zur Bildung von AU-4-Verwaltungseinheiten von STM-1-Signalen jeweils ein AU-4-PTR-Zeiger hinzugefügt wird,
**dadurch gekennzeichnet**,
daß Gruppen von vier Koppelfeld-Ausgangssignalen gebildet werden,
daß jedes Koppelfeld-Ausgangssignal (D39, D52) zwei eingangsseitig verbundenen und ausgangsseitig wechselweise durchschaltbaren Wegen zugeführt werden,
daß im ersten Weg zur Gewinnung einer TU-3x-Untersystemeinheit die Koppelfeld-Zusatzinformation (KFOH) und der TU-3x-PTR-(KF)-Koppelfeld-Taktanpassungszeiger entnommen und ein TU-3x-PTR-Zeiger hinzugefügt werden,
daß im zweiten Weg zur Gewinnung einer TUG-3x-Untersystemeinheitsgruppe die Koppelfeld-Zusatzinformation (KFOH) und eine Anzahl m von TU-1y-PTR-(KF)-Koppelfeld-Taktanpassungszeigern entnommen und eine Anzahl m von TU-1y-PTR-Zeigern und eine feste Stopfung (FS) hinzugefügt werden und
daß entweder die TU-3x-Untersystemeinheit oder die TUG-3x-Untersystemeinheitsgruppe jedes der vier Alternativpaare jeweils in einen C-4-Container eingefügt werden, wobei entweder x = 1 und y = 2 oder x = 2 und y = 1.

9. Verfahren nach Anspruch 8,
**dadurch gekennzeichnet**,
daß die TUG-3x-Untersystemeinheitsgruppe ohne feste Stopfung (FS) einem vom zweiten Weg nach der Einkopplung einer Anzahl m von TU-1y-PTR-Zeigern abzweigenden dritten Weg zugeführt wird, daß im dritten Weg dem C-3x-Gontainer zur Bildung eines VC-3x-Virtualcontainers ein VC-3x-POH-Pfadrahmenkopf hinzugefügt wird und
daß dieser VC-3x-Virtualcontainer zur Aufnahme eines TU-3x-PTR-Zeigers unter Abschaltung des entsprechenden ersten Teils des ersten Weges in den verbleibenden Teil des ersten Weges eingespeist wird.

10. Verfahren nach Anspruch 6, 7, 8 oder 9,
**dadurch gekennzeichnet**,
daß gleiche Verfahrensschritte im ersten und zweiten Weg mit jeweils einer Anordnung im Zeitmultiplex durchgeführt werden.

11. Verfahren nach Anspruch 6, 7, 8, 9 oder 10,
**dadurch gekennzeichnet**,
daß Umschaltschritte vom Signalinhalt und/oder von einem Netzwerk-Management ausgelöst werden.

## Claims

1. Cross-connect method for STM-1 signals of a synchronous digital multiplex hierarchy using demultiplexing methods in which each STM-1 signal is firstly decomposed into three (AU-32, TU-32, TUG-32) or four (AU-31, TU-31, TUG-31) upper units and the signals thus obtained are fed directly or, optionally, signals which have been decomposed via further paths into subunits (TUG-21, TU-11, TU-12, TUG-22, TU-12, TU-22) and inserted into a plurality of pulse frames of switching matrix input signals (D39, D52), are fed to inputs of a switching matrix, and switching matrix output signals (D39, D52) output by the switching matrix are subjected to a multiplexing method which reverses the demultiplexing method, characterized in that STM-1 signals are resolved into virtual container groups (TUG-31, TU-31, TUG-32, TU-32, VC-31, VC-32) in the demultiplexing methods, in that for the purpose of forming uniform switching matrix input signals (D39, D52) while renouncing additional signals (PTR, ...) which are no longer required, an individual switching matrix clock matching pointer (TU-3xPTR(KF), TU-1yPTR(KF)) and individual switching matrix additional information (KFOH) are respectively added to these virtual container groups, in that switching matrix input signals (D39, D52) originating from an upper unit are respectively fed to the switching matrix, in that the virtual containers (VC31, VC32, VC11, VC12) of the switching matrix input signals (D39, D52) are rearranged before being accepted into the switching matrix output signals (D39, D52), in that the switching matrix additional information is extracted from the switching matrix output signals and evaluated, in that the switching matrix output signals are respectively subjected to a multiplexing method in order to form STM-1 output signals, and in that in this case one path is selected in the multiplexing method in a fashion controlled by the signal content of the switching matrix output signals and/or by a network management system.

2. Method according to Claim 1, characterized in that a switching matrix frame alignment word, switching matrix path addresses and switching matrix quality monitoring information are provided as the switching matrix additional information.

3. Method according to Claim 1, characterized in that switching matrix additional information is added only to the switching matrix input signals fed to the switching matrix.

4. Method according to Claim 1, characterized in that virtual container groups 16 × VC-12, 4 × VC-22, 1 × VC-31, 20 × VC-11, and/or 5 × VC-21 are provided, in that switching matrix clock matching pointers (TU-12 PTR (KF), TU-22 PTR (KF), TU-31 PTR (KF), TU-11 PTR (KF) and/or TU-21 PTR (KF)) are provided, and in that switching matrix input signals and switching matrix output signals (D39) with a bit rate of 38912 kbit/s are provided.

5. Method according to Claim 1, characterized in that virtual container groups 28 × VC-11, 7 × VC-21, 1 × VC-32 and/or 21 × VC-12 are provided, in that switching matrix clock matching pointers (TU-11 PTR (KF), TU-21 PTR (KF), TU-32 PTR (KF) and/or TU-12 PTR (KF)) are provided, and in that switching matrix input signals and switching matrix output signals (D52) with a bit rate of 51968 kbit/s are provided.

6. Method according to Claim 1 for the switching matrix input side, in which a VC-4 virtual container is extracted from an STM-1 signal from its AU-4 administration unit in conjunction with decoupling and evaluating an AU-4-PTR administration unit pointer, in which a C-4 container is extracted from its VC-4 virtual container in conjunction with decoupling and evaluating its VC-4-POH path overhead, and in which the C-4 container is divided into four alternative pairs respectively composed of a TU-3x tributary unit or a TUG-3x tributary unit group, characterized in that each alternative pair is fed two paths connected on the input side and alternately capable of being switched through to the switching matrix on the output side, in that in the first path a VC-3x virtual container is extracted from its TU-3x tributary unit in conjunction with decoupling and evaluation of the TUG-3x-PTR tributary unit pointer, and a TU-3x-PTR-(KF) switching matrix clock matching pointer and switching matrix additional information (KFOH) are added to the VC-3x virtual container, and in that in the second path a fixed filling (FS) and a number m of TUG-1y-PTR tributary unit pointers are extracted from a TUG-3x tributary unit group in conjunction with evaluation, and a number m of TU-1y-PTR-(KF) switching matrix clock matching pointers and switching matrix additional information (KFOH) are added to the remaining number m of VC-1y virtual containers in order to form a switching matrix input signal (D39, D52), it being the case either that x = 1 and y = 2 or x = 2 and y = 1.

7. Method according to Claim 6, characterized in that the VC-3x virtual container is fed to a third path, which branches off from the first path, in that a C-3x container is extracted on the third path from its VC-3x virtual container in conjunction with decoupling its VC-3x-POH path overhead, and in that instead of a TUG-3x tributary unit group without fixed FS filling, this C-3x container is supplied to the remaining part of the second path in conjunction with the disconnection of the corresponding first part of the second path.

8. Method according to Claim 1 for in each case four switching matrix output signals, in which a VC-4-POH path overhead is respectively added to the C-4 containers in order to form a VC-4 virtual container, and in which an AU-4-PTR pointer is respectively added to VC-4 virtual containers in order to form AU-4 administration units of STM-1 signals, characterized in that groups of four switching matrix output signals are formed, in that each switching matrix output signal (D39, D52) is fed to two paths which are connected on the input side and are alternately capable of being switched through on the output side, in that the switching matrix additional information (KFOH) and the TU-3x-PTR-(KF) switching matrix clock matching pointer are extracted in the first path in order to obtain a TU-3x tributary unit and a TU-3x-PTR pointer is added, in that the switching matrix additional information (KFOH) and a number m of TU-1y-PTR-(KF) switching matrix clock matching pointers are extracted in the second path in order to obtain a TUG-3x tributary unit group and a number m of TU-1y-PTR pointers and a fixed filling (FS) are added, and in that either the TU-3x tributary unit or the TUG-3x tributary unit group of each of the four alternative pairs is respectively inserted into a C-4 container, it being the case that either x = 1 and y = 2 or x = 2 and y = 1.

9. Method according to Claim 8, characterized in that the TUG-3x tributary unit group without a fixed filling (FS) is fed to a third path which branches off from the second path after coupling in a number m of TU-1y-PTR pointers, in that a VC-3x-POH path overhead is added in the third path to the C-3x container in order to form a VC-3x virtual container, and in that this VC-3x virtual container is supplied to the remaining part of the first path in order to accept a TU-3x-PTR pointer in conjunction with the disconnection of the corresponding first part of the first path.

10. Method according to Claim 6, 7, 8 or 9, characterized in that identical method steps are carried out using time-division multiplexing in the first and second path using respectively one arrangement.

11. Method according to Claim 6, 7, 8, 9 or 10, characterized in that changeover steps are triggered by the signal content and/or by a network management system.

## Revendications

1. Procédé de connexion transversale (Cross-Connect) pour des signaux STM-1 de la hiérarchie multiplex, synchrone et numérique en utilisant des procédés de démultiplexage, dans lesquels on décompose chaque signal STM-1 d'abord en trois (AU-32, TU-32, TUG-32) ou quatre (AU-31, TU-31, TUG-31) unités supérieures, on envoie directement les signaux ainsi obtenus ou au choix des signaux, décomposés par d'autres voies en unités inférieures (TUG-21, TU-11, TU-12, TUG-22, TU-12, TU-22), dans plusieurs trames d'impulsion de signaux (D39, D52) d'introduction de réseau de connexion à des entrées intercalées d'un réseau de connexion et on soumet des signaux (D39, D52) de sortie du réseau de connexion fournis par le réseau de connexion à un procédé de multiplexage inverse du procédé de démultiplexage,
caractérisé en ce que dans les procédés de démultiplexage on décompose des signaux STM-1 en groupes (TUG-31, TU-31, TUG-32, TU-32, VC-31, VC-32) conteneurs virtuels,
on ajoute à chacun de ces groupes conteneurs virtuels, pour former des signaux (D39, D52) d'entrée uniformes de réseau de connexion en renonçant à des signaux (PTR, ...) supplémentaires qui ne sont plus nécessaires, un pointeur (Tu-3xPTR(KF), TU-1yPTR (KF)), individuel d'adaptation de cadence du réseau de connexion et une information (KFOH) supplémentaire individuelle du réseau de connexion,
on envoie au réseau de connexion des signaux (D39, D52) d'entrée du réseau de connexion provenant chacun d'une unité supérieure,
on réarrange les conteneurs (VC31, VC32, VC11, VC12) virtuels des signaux (D39, D52) d'entrée du réseau de connexion avant réception en les signaux (D39, D52) de sortie du réseau de connexion,
on prélève des signaux de sortie du réseau de connexion l'information supplémentaire du réseau de connexion et on l'exploite,
on soumet chacun des signaux de sortie du réseau de connexion à un procédé de multiplexage pour former des signaux de sortie STM-1,
on sélectionne, sous la commande du contenu des signaux de sortie du réseau de connexion et/ou d'une gestion de réseau, une voie dans le procédé de multiplexage.

2. Procédé suivant la revendication 1, caractérisé en ce qu'il est prévu comme information supplémentaire du réseau de connexion un mot caractéristique de trame du réseau de connexion, des adresses de voie du réseau de connexion et des informations de contrôle de qualité du réseau de connexion.

3. Procédé suivant la revendication 1, caractérisé en ce que l'on n'adjoint une information supplémentaire du réseau de connexion qu'aux signaux d'entrée du réseau de connexion envoyés au réseau de connexion.

4. Procédé suivant la revendication 1, caractérisé en ce qu'il est prévu des groupes conteneurs virtuels 16 x VC-12, 4 x VC-22, 1 x VC-31, 20 x VC-11 et/ou 5 x VC-21,
il est prévu des pointeurs (TU-12 PTR (KF), TU-22 PTR (KF), TU-31 PTR (KF), TU-11 PTR (KF) et/ou TU-21 PTR (KF)) d'adaptation de cadence du réseau de connexion et
il est prévu des signaux d'entrée et de sortie (D39) du réseau de connexion, ayant un débit binaire de 38912 Kbit/s.

5. Procédé suivant la revendication 1, caractérisé en ce qu'il est prévu des groupes conteneurs virtuels 28 x VC-11, 7 x VC-21, 1 x VC-32 et/ou 21 x VC-12,
il est prévu des pointeurs (TU-11 PTR (KF), TU-21 PTR (KF), TU-32 PTR (KF) et/ou TU-12 PTR (KF)) d'adaptation de cadence du réseau de connexion et
il est prévu des signaux d'entrée et de sortie (D52) du réseau de connexion, ayant un débit binaire de 51968 Kbit/s.

6. Procédé suivant la revendication 1 pour le côté entrée du réseau de connexion, dans lequel on prélève d'une unité AU-4 de gestion d'un signal STM-1 un conteneur virtuel VC-4 moyennant découplage et exploitation d'un pointeur d'unité de gestion AU-4-PTR,
dans lequel on prélève du conteneur virtuel VC-4, moyennant découplage et exploitation de son en-tête de trame de trajet VC-4-POH, son conteneur C-4 et
dans lequel on subdivise le conteneur C-4 en quatre paires alternatives formées chacune d'une unité tributaire TU-3x ou d'un groupe d'unités tributaires TUG-3x,
caractérisé en ce que on amène à chaque paire alternative deux voies reliées du côté entrée et pouvant communiquer du côté sortie en alternance avec le réseau de connexion,
on prélève de la première voie d'une unité tributaire TU-3x son conteneur virtuel VC-3x moyennant découplage et exploitation du pointeur TUG-3x-PTR d'unités tributaires et on ajoute au conteneur virtuel VC-3x un pointeur TU-3x-PTR-(KF) d'adaptation de cadence du réseau de connexion et une information supplémentaire (KFOH) du réseau de connexion et on prélève dans la deuxième voie d'un groupe d'unités tributaires TUG-3x une justification fixe (FS) et un nombre m de pointeurs d'unités tributaires TUG-1y-PTR moyennant exploitation et on ajoute au nombre restant m de conteneurs virtuels VC-1y un nombre m de pointeurs TU-1y-PTR-(KF) d'adaptation de cadence du réseau de connexion et une information (KFOH) supplémentaire du réseau de connexion pour former un signal (D39, D52) d'entrée du réseau de connexion, en ayant soit x = 1 et y = 2, soit x = 2 et y = 1.

7. Procédé suivant la revendication 6, caractérisé en ce que on envoie le conteneur virtuel VC-3x à une troisième voie dérivant de la première voie,
on prélève du conteneur virtuel VC-3x, sur la troisième voie, moyennant découplage de son en-tête VC-3x-POH de trame de trajet, son conteneur C-3x et
on introduit ce conteneur C-3x au lieu d'un groupe d'unités tributaires TUG-3x, sans justification FS fixe moyennant coupure de la première partie correspondante de la deuxième voie, dans la partie restante de la deuxième voie.

8. Procédé suivant la revendication 1 pour quatre signaux de sortie du réseau de connexion,
dans lequel on ajoute à chaque conteneur C-4, pour former un conteneur virtuel VC-4, un en-tête de trame de trajet VC-4-POH et
dans lequel on ajoute à chacun des conteneurs virtuels VC-4, pour former des unités AU-4 de gestion de signaux STM-1, un pointeur AU-4-PTR,
caractérisé en ce que l'on forme des groupes de quatre signaux de sortie du réseau de connexion,
on envoie chaque signal (D39, D52) de sortie du réseau de connexion à deux voies reliées du côté entrée et pouvant communiquer du côté sortie en alternance,
on prélève dans la première voie, pour obtenir une unité tributaire TU-3x, l'information (KFOH) supplémentaire du réseau de connexion et le pointeur TU-3x-PTR-(KF) d'adaptation de cadence du réseau de connexion et on y ajoute un pointeur TU-3x-PTR,
on prélève dans la deuxième voie, pour obtenir un groupe TUG-3x d'unités tributaires, l'information (KFOH) supplémentaire du réseau de connexion et un nombre m de pointeurs TU-1y-PTR-(KF) d'adaptation de cadence du réseau de connexion et on y ajoute un nombre m de pointeurs TU-1y-PTR et une justification (FS) fixe et
on insère soit l'unité tributaire TU-3x ou le groupe d'unités tributaires TUG-3x de chacune des quatre paires alternatives dans un conteneur C-4, en ayant soit x = 1 et y = 2, soit x = 2 et y = 1.

9. Procédé suivant la revendication 8, caractérisé en ce que l'on envoie le groupe d'unités tributaires TUG-3x sans justification (FS) fixe à une troisième voie dérivant de la deuxième voie après le couplage d'un nombre m de pointeurs TU-1y-PTR,
on ajoute dans la troisième voie au conteneur C-3x, pour former un conteneur virtuel VC-3x, un en-tête VC-3x-POH de trame de trajet et
on introduit ce conteneur virtuel VC-3x, pour la réception d'un pointeur TU-3x-PTR, moyennant coupure de la première partie correspondante de la première voie, dans la partie restante de la première voie.

10. Procédé suivant la revendication 6, 7, 8 ou 9, caractérisé en ce que on effectue les mêmes étapes opératoires dans la première et dans la deuxième voie avec dans chacune un dispositif de multiplexage temporel.

11. Procédé suivant la revendication 6, 7, 8, 9 ou 10, caractérisé en ce que des étapes de commutation sont déclenchées par le contenu des signaux et/ou par une gestion du réseau.
